# EUROPEAN PATENT APPLICATION

(11) **EP 4 819 312 A1**
(43) Date of publication of application: **07.10.2026**
(21) Application number: 25909611.3
(22) Date of filing: 13.11.2025
(51) Int. Cl.: H01M 50/103

(54) **BATTERY CELL AND BATTERY PACK**

(30) Priority: 02.01.2025 CN 202520015933 U
(71) Applicant: Sunwoda Mobility Energy Technology Co., Ltd., Shenzhen, Guangdong 518107 (CN)
(72) Inventor: LI, Minjian, Shenzhen, Guangdong 518107 (CN); YANG, Wei, Shenzhen, Guangdong 518107 (CN)
(74) Representative: Patentwerk B.V.
(86) International application number: PCT/CN2025/134556
(87) International publication number: WO 2026/144570

(57) **Abstract**

A battery cell and a battery pack are disclosed. The battery cell includes: a housing, provided with an accommodating cavity therein, and provided with an opening on one side thereof in a height direction of the housing; a first cover plate, configured to cover the opening; a second cover plate, located on a side of the housing away from the opening, and provided with a pressure relief hole extending through the second cover plate in the height direction, where the second cover plate is provided with a protruding portion surrounding the pressure relief hole, and the protruding portion protrudes from the second cover plate toward the opening; an explosion-proof valve, sealingly mounted in the pressure relief hole; and an insulating gasket, arranged in the accommodating cavity and between the first cover plate and the second cover plate, and provided with a gas guiding groove and a clearance hole both extending through the insulating gasket in the height direction. The clearance hole is arranged opposite to the pressure relief hole in the height direction. The protruding portion is inserted into the clearance hole and is in clearance fit with the clearance hole. Thus, the gas guiding groove, the clearance hole, and the pressure relief hole form an effective gas channel, ensuring smooth venting of high-temperature gas generated during thermal runaway.

## Description

### CROSS REFERENCE TO RELATED APPLICATION

This application is filed on the basis of Chinese patent application No. 202520015933.1 filed January 2, 2025, and claims priority to the Chinese patent application, the entire contents of which are incorporated herein by reference.

### TECHNICAL FIELD

The present disclosure relates to the technical field of batteries, and in particular, to a battery cell and a battery pack.

### BACKGROUND

Currently, battery cells typically have a positive terminal, a negative terminal, and an explosion-proof valve located at the top cover. However, in the case of battery cells abuse or under extreme conditions, such a design can easily lead to electrical insulation failure and thermal runaway, compromising safety of battery cells.

To mitigate the risk of electrical insulation failure and thermal runaway, a thermal-electric separation design is gradually being adopted. According to the thermal-electric separation design, the explosion-proof valve is not provided at the top cover, but is provided at the bottom of the housing, which ensures that electrical connections and thermal runaway venting do not interfere with each other under extreme situations. Because the explosion-proof valve is welded to the bottom of the housing, the bottom of the housing needs sufficient thickness to withstand welding requirements. Increasing the thickness of the bottom of the housing easily leads to an excessive weight of the housing, affecting the energy density of the battery cell. In addition, when the explosion-proof valve is located at the bottom of the housing, the electrode assembly, due to its own weight, rests tightly against the bottom of the housing, and there is a risk of the electrode assembly blocking the valve port of the explosion-proof valve. Once the valve port of the explosion-proof valve is blocked by the electrode assembly, high-temperature gas in the battery cell cannot be vented smoothly in the event of thermal runaway, which could easily lead to a battery explosion.

Therefore, a battery cell in which the explosion-proof valve is designed at the bottom of the housing have the following disadvantages: the thickness of the bottom of the housing needs to be increased, which easily leads to an excessive weight of the housing; and the electrode assembly easily blocks the valve port of the explosion-proof valve, resulting in that high-temperature gas cannot be vented smoothly in the event of thermal runaway.

### SUMMARY

A technical problem to be solved by the present disclosure is that: for battery cells in which the explosion-proof valve is designed at the bottom of the housing, the thickness of the bottom of the housing needs to be increased, which easily leads to an excessive weight of the housing; and the electrode assembly easily blocks the valve port of the explosion-proof valve, resulting in that high-temperature gas cannot be vented smoothly in the event of thermal runaway.

To solve the above technical problems, one technical scheme of the present disclosure provides a battery cell.

The battery cell has a height direction, a length direction, and a width direction intersecting each other, and includes:
a housing, where an accommodating cavity is provided in the housing, the housing is provided with an opening on one side thereof in the height direction, and the opening is in communication with the accommodating cavity;
a first cover plate, where the first cover plate is configured to cover and seal the opening;
a second cover plate of the housing, where the second cover plate is located on a side of the housing away from the opening in the height direction, the second cover plate is provided with a pressure relief hole, the pressure relief hole extends through the second cover plate in the height direction, the second cover plate is further provided with a protruding portion surrounding the pressure relief hole, and the protruding portion protrudes from the second cover plate toward the opening;
an explosion-proof valve, where the explosion-proof valve is sealingly mounted in the pressure relief hole; and
an insulating gasket, where the insulating gasket is arranged in the accommodating cavity and between the first cover plate and the second cover plate, the insulating gasket is provided with a gas guiding groove and a clearance hole, the gas guiding groove and the clearance hole extend through the insulating gasket in the height direction, the clearance hole is arranged opposite to the pressure relief hole in the height direction, the protruding portion is inserted into the clearance hole and is in clearance fit with the clearance hole, and the gas guiding groove and the clearance hole are in communication with the pressure relief hole.

In one embodiment, in the height direction, a height by which the protruding portion protrudes from the second cover plate toward the opening is defined as H1, a thickness of the insulating gasket is defined as H2, and H1≤H2.

In one embodiment, the protruding portion includes a plurality of protrusions, and the plurality of protrusions are arranged surrounding the pressure relief hole and spaced apart from each other.

Preferably, two adjacent protrusions of the plurality of protrusions are spaced apart to define a gas guiding channel therebetween, the gas guiding channel is located in the clearance hole, and the gas guiding channel is in communication with the pressure relief hole and the gas guiding groove.

More preferably, the gas guiding groove and the gas guiding channel are arranged extending in the length direction.

In one embodiment, a width of the gas guiding channel in the width direction is defined as D1, a width of the gas guiding groove in the width direction is defined as D2, and D1≤D2.

In one embodiment, the pressure relief hole is provided at a middle portion of the second cover plate in the length direction, and the clearance hole is provided at a middle portion of the insulating gasket in the length direction; and two gas guiding grooves are respectively provided on two opposing sides of the clearance hole in the length direction.

In one embodiment, the explosion-proof valve and the housing are integrally formed.

In one embodiment, the protruding portion and the second cover plate are integrally formed.

In one embodiment, the second cover plate is provided with a weakened region, and the weakened region is arranged surrounding the protruding portion.

Further, a thickness of the weakened region in the height direction is smaller than a thickness of the second cover plate in the height direction.

In one embodiment, the weakened region is a score.

In one embodiment, the battery cell further includes an electrode assembly, where the insulating gasket is arranged between the electrode assembly and the second cover plate.

In one embodiment, a protective sheet is further arranged on a side of the explosion-proof valve away from the opening.

To solve the above technical problems, another technical scheme of the present disclosure provides a battery pack.

The battery pack includes a battery cell.

The battery cell has a height direction, a length direction, and a width direction intersecting each other, and includes:
a housing, where an accommodating cavity is provided in the housing, the housing is provided with an opening on one side thereof in the height direction, and the opening is in communication with the accommodating cavity;
a first cover plate, where the first cover plate is configured to cover and seal the opening;
a second cover plate of the housing, where the second cover plate is located on a side of the housing away from the opening in the height direction, the second cover plate is provided with a pressure relief hole, the pressure relief hole extends through the second cover plate in the height direction, the second cover plate is further provided with a protruding portion surrounding the pressure relief hole, and the protruding portion protrudes from the second cover plate toward the opening;
an explosion-proof valve, where the explosion-proof valve is sealingly mounted in the pressure relief hole; and
an insulating gasket, where the insulating gasket is arranged in the accommodating cavity and between the first cover plate and the second cover plate, the insulating gasket is provided with a gas guiding groove and a clearance hole, the gas guiding groove and the clearance hole extend through the insulating gasket in the height direction, the clearance hole is arranged opposite to the pressure relief hole in the height direction, the protruding portion is inserted into the clearance hole and is in clearance fit with the clearance hole, and the gas guiding groove and the clearance hole are in communication with the pressure relief hole.

In one embodiment, in the height direction, a height by which the protruding portion protrudes from the second cover plate toward the opening is defined as H1, a thickness of the insulating gasket is defined as H2, and H1≤H2.

In one embodiment, the protruding portion includes a plurality of protrusions, and the plurality of protrusions are arranged surrounding the pressure relief hole and spaced apart from each other.

Preferably, two adjacent protrusions of the plurality of protrusions are spaced apart to define a gas guiding channel therebetween, the gas guiding channel is located in the clearance hole, and the gas guiding channel is in communication with the pressure relief hole and the gas guiding groove.

More preferably, the gas guiding groove and the gas guiding channel are arranged extending in the length direction.

In one embodiment, a width of the gas guiding channel in the width direction is defined as D1, a width of the gas guiding groove in the width direction is defined as D2, and D1≤D2.

In one embodiment, the pressure relief hole is provided at a middle portion of the second cover plate in the length direction, and the clearance hole is provided at a middle portion of the insulating gasket in the length direction; and two gas guiding grooves are respectively provided on two opposing sides of the clearance hole in the length direction.

In one embodiment, the explosion-proof valve and the housing are integrally formed.

In one embodiment, the protruding portion and the second cover plate are integrally formed.

In one embodiment, the second cover plate is provided with a weakened region, and the weakened region is arranged surrounding the protruding portion.

Further, a thickness of the weakened region in the height direction is smaller than a thickness of the second cover plate in the height direction.

In one embodiment, the weakened region is a score.

In one embodiment, the battery cell further includes an electrode assembly, where the insulating gasket is arranged between the electrode assembly and the second cover plate.

In one embodiment, a protective sheet is further arranged on a side of the explosion-proof valve away from the opening.

Compared with the existing technology, the battery cell and the battery pack of the present disclosure have the following beneficial effects. The battery cell adopts a design including a housing, a first cover plate, a second cover plate, an explosion-proof valve, and an insulating gasket. The housing is provided with an accommodating cavity and an opening, through which an electrode assembly can be mounted in the housing. The first cover plate is mounted on the opening, and the accommodating cavity is sealed by the first cover plate. The first cover plate is provided with an electrical connection portion serving as an electrical terminal. The second cover plate is located on a side of the housing away from the opening in the height direction. The second cover plate is provided with a pressure relief hole and a protruding portion. The explosion-proof valve is mounted in the pressure relief hole to seal the pressure relief hole, and is opened to vent high-temperature gas when the pressure in the housing is too high.

The protruding portion protrudes from a surface of the second cover plate toward the opening. As such, only the part of the second cover plate provided with the protruding portion has a large thickness, thereby avoiding an increase in the overall thickness of the second cover plate that would otherwise lead to an excessive weight of the housing, and ensuring the energy density of the battery cell. In addition, the insulating gasket is arranged in the accommodating cavity and is located between the first cover plate and the second cover plate. The insulating gasket supports the electrode assembly in the height direction to prevent the electrode assembly from blocking the pressure relief hole. Moreover, the insulating gasket is provided with a gas guiding groove and a clearance hole. The clearance hole is arranged opposite to the pressure relief hole in the height direction. The protruding portion is inserted into the clearance hole and is in clearance fit with the clearance hole. The gas guiding groove and the clearance hole are in communication with the pressure relief hole. Thus, the gas guiding groove, the clearance hole, and the pressure relief hole form an effective gas channel, ensuring smooth venting of high-temperature gas generated during thermal runaway.

### BRIEF DESCRIPTION OF DRAWINGS

FIG. 1 is a schematic exploded view of a battery cell according to an embodiment of the present disclosure;
FIG. 2 is a three-dimensional schematic view of a second cover plate and an insulating gasket according to an embodiment of the present disclosure;
FIG. 3 is a schematic sectional view of a battery cell taken along a width direction according to an embodiment of the present disclosure; and
FIG. 4 is a partially enlarged view of the second cover plate and the insulating gasket in FIG. 3.

In the drawings, the reference numerals respectively represent: 1. housing; 10. accommodating cavity; 2. first cover plate; 3. second cover plate; 30. pressure relief hole; 31. protruding portion; 310. protrusion; 32. gas guiding channel; 33. weakened region; 4. explosion-proof valve; 40. protective sheet; 5. insulating gasket; 50. gas guiding groove; 51. clearance hole; 6. electrode assembly; X. height direction; Y. length direction; Z. width direction.

### DETAILED DESCRIPTION

The present disclosure will be described in further detail with reference to the accompanying drawings and embodiments. The following embodiments are used for illustrating the present disclosure, and are not intended to limit the scope of the present disclosure.

In the description of the present disclosure, it should be understood that, terms such as "central," "longitudinal," "lateral," "length," "width," "thickness," "upper," "lower," "front," "rear," "left," "right," "vertical," "horizontal," "top," "bottom," "inner," "outer," "clockwise," and "counterclockwise" should be construed to refer to the orientation as then described or as shown in the drawings under discussion. These relative terms are for convenience of description and do not require that the present disclosure be constructed or operated in a particular orientation, therefore cannot be construed to limit the present disclosure.

In addition, terms such as "first" and "second" are used herein for purposes of description and are not intended to indicate or imply relative importance or significance or to imply the number of indicated technical features. Thus, the feature defined with "first" and "second" may explicitly or implicitly includes one or more of the features. In the description of the present disclosure, "a plurality of/multiple" means two or more than two, unless specified otherwise.

In the present disclosure, unless specified or limited otherwise, the terms "mounted," "connected," "coupled," "fixed" and the like are used broadly, and may be, for example, fixed connections, detachable connections, or integral connections; may also be direct connections, or indirect connections via intervening structures; may also be inner communications or interaction of two elements. The specific meaning of the above terms within the present disclosure may be understood by those skilled in the art according to particular circumstances.

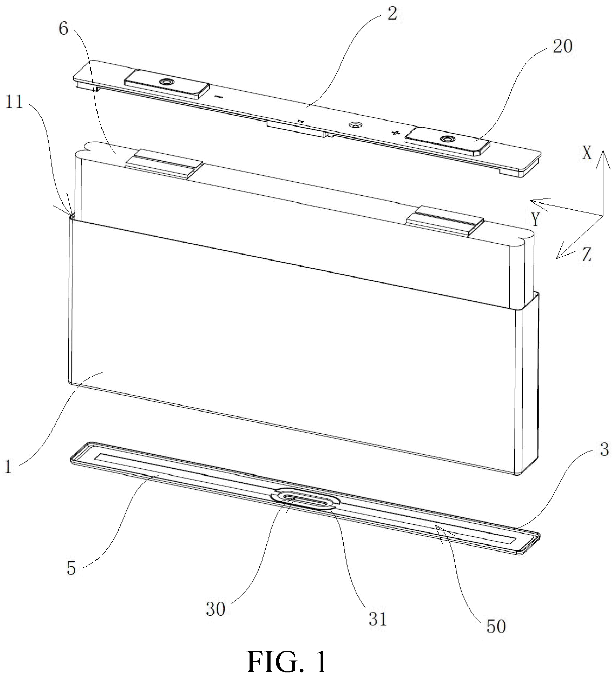

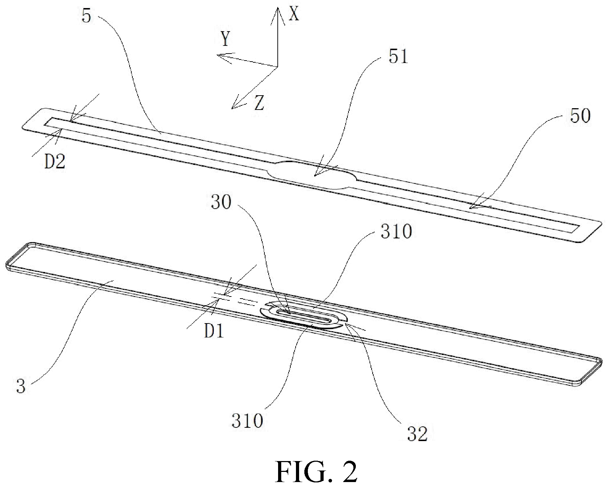

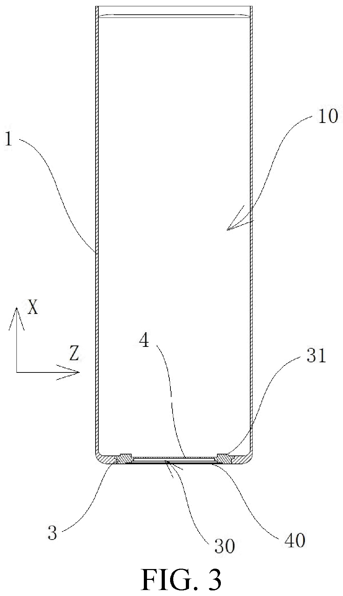

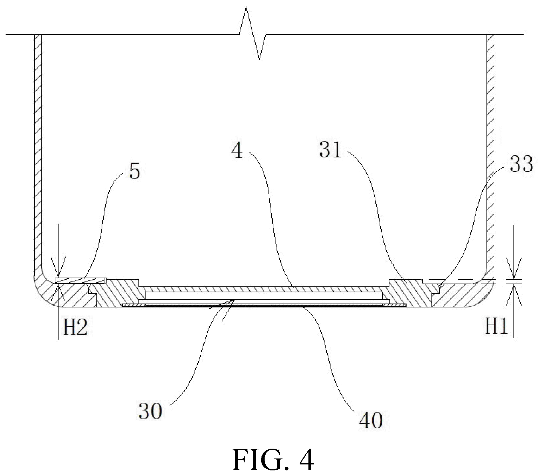

As shown in FIG. 1 to FIG. 4, an embodiment of the present disclosure provides a battery cell, which has a height direction X, a length direction Y, and a width direction Z intersecting each other, and includes a housing 1, a first cover plate 2, an explosion-proof valve 4, and an insulating gasket 5. An accommodating cavity 10 is provided in the housing 1. The housing 1 is provided with an opening 11 on one side thereof in the height direction X. The opening 11 is in communication with the accommodating cavity 10. The first cover plate 2 is configured to cover and seal the opening 11. The housing 1 includes a second cover plate 3. The second cover plate 3 is located on a side of the housing 1 away from the opening 11 in the height direction X.

The second cover plate 3 is provided with a pressure relief hole 30. The pressure relief hole 30 extends through the second cover plate 3 in the height direction X. The second cover plate 3 is further provided with a protruding portion 31 surrounding the pressure relief hole 30. The protruding portion 31 protrudes from the second cover plate 3 toward the opening 11. The explosion-proof valve 4 is sealingly mounted in the pressure relief hole 30. The insulating gasket 5 is arranged in the accommodating cavity 10 and between the first cover plate 2 and the second cover plate 3. The insulating gasket 5 is provided with a gas guiding groove 50 and a clearance hole 51. The gas guiding groove 50 and the clearance hole 51 extend through the insulating gasket 5 in the height direction X. The clearance hole 51 is arranged opposite to the pressure relief hole 30 in the height direction X. The protruding portion 31 is inserted into the clearance hole 51 and is in clearance fit with the clearance hole 51. The gas guiding groove 50 and the clearance hole 51 are in communication with the pressure relief hole 30.

The battery cell adopts a design including a housing 1, a first cover plate 2, a second cover plate 3, an explosion-proof valve 4, and an insulating gasket 5. The housing 1 is provided with an accommodating cavity 10 and an opening 11, through which an electrode assembly 6 can be mounted in the housing 1. The first cover plate 2 is mounted on the opening 11, such that the accommodating cavity 10 is sealed by the first cover plate 2. The first cover plate 2 is provided with an electrical connection portion serving as an electrical terminal. The second cover plate 3 is located on a side of the housing 1 away from the opening 11 in the height direction X. The second cover plate 3 is provided with a pressure relief hole 30 and a protruding portion 31. The explosion-proof valve 4 is mounted in the pressure relief hole 30 to seal the pressure relief hole 30, and is opened to vent high-temperature gas when the pressure in the housing 1 is too high.

The protruding portion 31 protrudes from a surface of the second cover plate 3 toward the opening 11. As such, only the part of the second cover plate 3 provided with the protruding portion 31 has a large thickness, thereby avoiding an increase in the overall thickness of the second cover plate 3 that would otherwise lead to an excessive weight of the housing 1, and ensuring the energy density of the battery cell. In addition, the insulating gasket 5 is arranged in the accommodating cavity 10 and is located between the first cover plate 2 and the second cover plate 3, specifically between the electrode assembly 6 and the second cover plate 3. The insulating gasket 5 supports the electrode assembly 6 in the height direction X to prevent the electrode assembly 6 from blocking the pressure relief hole 30. Moreover, the insulating gasket 5 is provided with a gas guiding groove 50 and a clearance hole 51. The clearance hole 51 is arranged opposite to the pressure relief hole 30 in the height direction X. The protruding portion 31 is inserted into the clearance hole 51 and is in clearance fit with the clearance hole 51. The gas guiding groove 50 and the clearance hole 51 are in communication with the pressure relief hole 30. Thus, the gas guiding groove 50, the clearance hole 51, and the pressure relief hole 30 form an effective gas channel, ensuring smooth venting of high-temperature gas generated during thermal runaway.

In this embodiment, in the height direction X, a height by which the protruding portion 31 protrudes from the surface of the second cover plate 3 toward the opening 11 is defined as H1, a thickness of the insulating gasket 5 is defined as H2, and H1≤H2. For example, 0.2 mm≤H1≤2.2 mm, and 0.25 mm≤H2≤3 mm. For example, H1 is 0.2 mm, 0.3 mm, 0.5 mm, 1 mm, 2 mm, or any other value between 0.2 mm and 2.2 mm. Correspondingly, H2 may be 0.25 mm, 0.4 mm, 0.7 mm, 1.5 mm, 3 mm, or any other value between 0.25 mm and 3 mm, as long as H2 is not smaller than H1. The thickness of the insulating gasket 5 greater than the height H1 can stably support the electrode assembly 6 in the height direction X to ensure the formation of a gap between the electrode assembly 6 and the protruding portion 31 as much as possible, thereby ensuring that high-temperature gas can smoothly enter the pressure relief hole 30. In addition, a protective sheet 40 is further mounted on the pressure relief hole 30, and the protective sheet 40 is located on a side of the explosion-proof valve 4 away from the opening 11. The protective sheet 40 is configured to protect the explosion-proof valve 4 and prevent the explosion-proof valve 4 from being damaged by an external force.

As a further preferred embodiment, the protruding portion 31 includes a plurality of protrusions 310, and the plurality of protrusions 310 are arranged surrounding the pressure relief hole 30 and spaced apart from each other. The design of the protruding portion 31 including a plurality of protrusions 310 separate from each other ensures that the explosion-proof valve 4 can be stably carried, and reduces the area of the region occupied by the protruding portion 31. In addition, two adjacent protrusions 310 of the plurality of protrusions 310 are spaced apart to define a gas guiding channel 32 therebetween, and the gas guiding channel 32 is in communication with the pressure relief hole 30 and the gas guiding groove 50, thereby ensuring a smoother venting path from the gas guiding groove 50 to the pressure relief hole 30.

In the housing 1, the gas guiding groove 50 and the gas guiding channel 32 are arranged extending in the length direction Y, to provide adequate communication between the electrode assembly 6 and the pressure relief hole 30. In addition, a width of the gas guiding channel 32 in the width direction Z is defined as D1, a width of the gas guiding groove 50 in the width direction Z is defined as D2, and D1≤D2. Such a configuration can prevent the formation of a venting bottleneck at the protruding portion 31. For example, D1 may be any value between 2 mm and 60 mm. Correspondingly, D2 may be any value between 2 mm and 70 mm as long as D2 is greater than or equal to D1.

In this embodiment, the pressure relief hole 30 is provided at a middle portion of the second cover plate 3 in the length direction Y, and the clearance hole 51 is provided at a middle portion of the insulating gasket 5 in the length direction Y; and two gas guiding grooves 50 are respectively provided on two opposing sides of the clearance hole 51 in the length direction Y. As such, in the housing 1, venting paths are formed converging toward the middle portion from the two sides in the length direction Y, thereby ensuring the smoothness of the venting paths.

In addition, the explosion-proof valve 4 and the housing 1 are integrally formed, and the protruding portion 31 and the second cover plate 3 are integrally formed. For example, the protruding portion 31 and the second cover plate 3 are integrally formed by stamping, thereby simplifying the assembly of the protruding portion 31 and the second cover plate 3. Further, the second cover plate 3 is provided with a weakened region 33, and the weakened region 33 is arranged surrounding the protruding portion 31. For example, the weakened region 33 is a score. A thickness of the weakened region 33 in the height direction X is smaller than a thickness of the second cover plate 3 in the height direction X. An area enclosed by the weakened region 33 is larger, so that when thermal runaway occurs, the weakened region 33 can rupture to form a larger venting hole, which improves the venting effect, and provides a supplementary pressure relief function for the explosion-proof valve 4.

An embodiment of the present disclosure further provides a battery pack, which includes a battery cell. The battery cell is the same as that described in the above battery cell embodiments of the present disclosure, so the details will not be repeated herein.

While exemplary embodiments of the present disclosure have been described above, the present disclosure is not limited thereto. It should be appreciated that some improvements and replacements can be made by those having ordinary skills in the art without departing from the technical principles of the present disclosure, which are also contemplated to be within the protection scope of the present disclosure.

## Claims

1. A battery cell, having a height direction (X), a length direction (Y), and a width direction (Z) intersecting each other, the battery cell comprising:
a housing (1), wherein an accommodating cavity (10) is provided in the housing (1), the housing (1) is provided with an opening (11) on one side thereof in the height direction (X), and the opening (11) is in communication with the accommodating cavity (10);
a first cover plate (2), wherein the first cover plate (2) is configured to cover and seal the opening (11);
a second cover plate (3) of the housing (100), wherein the second cover plate (3) is located on a side of the housing (1) away from the opening (11) in the height direction (X), the second cover plate (3) is provided with a pressure relief hole (30), the pressure relief hole (30) extends through the second cover plate (3) in the height direction (X), the second cover plate (3) is further provided with a protruding portion (31) surrounding the pressure relief hole (30), and the protruding portion (31) protrudes from the second cover plate (3) toward the opening (11);
an explosion-proof valve (4), wherein the explosion-proof valve (4) is sealingly mounted in the pressure relief hole (30); and
an insulating gasket (5), wherein the insulating gasket (5) is arranged in the accommodating cavity (10) and between the first cover plate (2) and the second cover plate (3), the insulating gasket (5) is provided with a gas guiding groove (50) and a clearance hole (51), the gas guiding groove (50) and the clearance hole (51) extend through the insulating gasket (5) in the height direction (X), the clearance hole (51) is arranged opposite to the pressure relief hole (30) in the height direction (X), the protruding portion (31) is inserted into the clearance hole (51) and is in clearance fit with the clearance hole (51), and the gas guiding groove (50) and the clearance hole (51) are in communication with the pressure relief hole (30).

2. The battery cell of claim 1, wherein in the height direction (X), a height by which the protruding portion (31) protrudes from the second cover plate (3) toward the opening (11) is defined as H1, a thickness of the insulating gasket (5) is defined as H2, and H1≤H2.

3. The battery cell of claim 1, wherein the protruding portion (31) comprises a plurality of protrusions (310), and the plurality of protrusions (310) are arranged surrounding the pressure relief hole (30) and spaced apart from each other.

4. The battery cell of claim 3, wherein two adjacent protrusions (310) of the plurality of protrusions (310) are spaced apart to define a gas guiding channel (32) therebetween, the gas guiding channel (32) is located in the clearance hole (51), and the gas guiding channel (32) is in communication with the pressure relief hole (30) and the gas guiding groove (50).

5. The battery cell of claim 4, wherein the gas guiding groove (50) and the gas guiding channel (32) are arranged extending in the length direction (Y).

6. The battery cell of claim 4, wherein a width of the gas guiding channel (32) in the width direction (Z) is defined as D1, a width of the gas guiding groove (50) in the width direction (Z) is defined as D2, and D1≤D2.

7. The battery cell of claim 1, wherein the pressure relief hole (30) is provided at a middle portion of the second cover plate (3) in the length direction (Y), and the clearance hole (51) is provided at a middle portion of the insulating gasket (5) in the length direction (Y); and
two gas guiding grooves (50) are respectively provided on two opposing sides of the clearance hole (51) in the length direction (Y).

8. The battery cell of claim 1, wherein the explosion-proof valve (4) and the housing (1) are integrally formed.

9. The battery cell of claim 1, wherein the protruding portion (31) and the second cover plate (3) are integrally formed.

10. The battery cell of claim 9, wherein the second cover plate (3) is provided with a weakened region (33), and the weakened region (33) is arranged surrounding the protruding portion (31).

11. The battery cell of claim 10, wherein a thickness of the weakened region (33) in the height direction (X) is smaller than a thickness of the second cover plate (3) in the height direction (X).

12. The battery cell of claim 11, wherein the weakened region (33) is a score.

13. The battery cell of claim 1, further comprising an electrode assembly (6), wherein the insulating gasket (5) is arranged between the electrode assembly (6) and the second cover plate (3).

14. The battery cell of claim 1, wherein a protective sheet (40) is arranged on a side of the explosion-proof valve (4) away from the opening (11).

15. A battery pack, comprising the battery cell of any one of claims 1 to 13.
